# EUROPEAN PATENT APPLICATION

(11) **EP 0 600 391 A1**
(43) Date of publication of application: **08.06.1994**
(21) Application number: 93119106.8
(22) Date of filing: 26.11.1993
(51) Int. Cl.: G02B 26/10

(54) **Deflection scan apparatus**

(30) Priority: 28.11.1992 JP 341130/92
(71) Applicant: CANON KABUSHIKI KAISHA, Tokyo (JP)
(72) Inventor: Miyamoto, Hideyuki, c/o CANON KABUSHIKI KAISHA, Tokyo 146 (JP)
(74) Representative: Tiedtke, Harro, Dipl.-Ing.

(57) **Abstract**

A deflection scan apparatus includes a shaft having a recess on a peripheral surface thereof, a deflector attached to the shaft, for deflecting a light beam, an outer ring having a recess on an inner surface thereof, a rolling member provided between the recess of the shaft and the recess of the outer ring, a fixing member to which the outer ring is fixed, the fixing member being made of a material having a coefficient of linear thermal expansion substantially coincident with that of the shaft, and a drive device for rotating the shaft.

## Description

### BACKGROUND OF THE INVENTION

### Field of the Invention

The present invention relates to a deflection scan apparatus, in which a rotating mirror for deflection scan of light beam is fixed on a shaft in a shaft bearing.

### Related Background Art

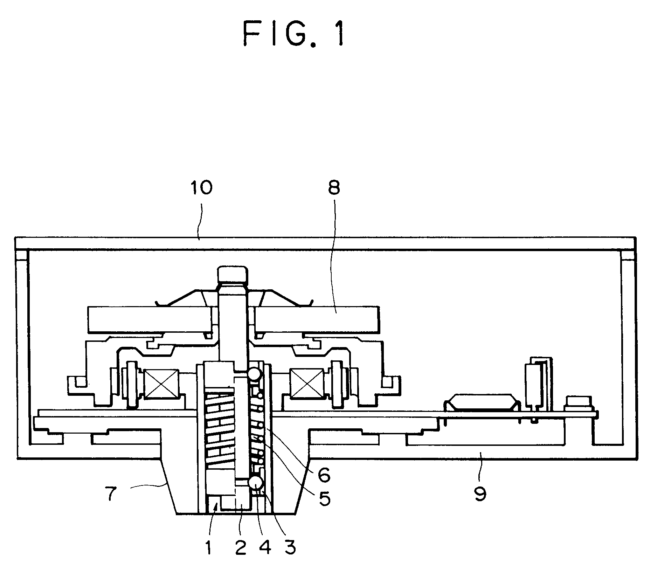

The deflection scan apparatus of this type need a motor unit rotating at high speed and at high precision, which includes a shaft bearing high in shaft shake precision. For example, two outer rings 3 are arranged to surround a shaft 2 in a shaft bearing 1 and rolling elements 4 are fit in between the shaft 2 and the outer rings 3, as shown in Fig. 1. A pre-load spring 5 is provided between the two outer rings 3 to eliminate the clearance between the outer rings 3 and the rolling elements 4 while giving a pre-load on the rolling elements 4. The outer rings 3 are fixed in a sleeve 6 in the state that the pre-load spring 5 urges the outer rings 3 apart from each other, whereby the pre-load is exerted on the rolling elements 4, which prevents the rocking motion of the shaft 2. The sleeve 6 of the shaft bearing 1 is fixed in a housing 7, and a rotating mirror 8 is fixed on the shaft 2. Also, the housing 7 is fixedly set in an optical box 9, and a cover 10 is attached to the optical box 9.

The above conventional example, however, includes such a problem that since the shaft 2 and the sleeve 6 are made of stainless steel and of brass, respectively, the sleeve 6 with larger coefficient of linear thermal expansion expands more than the shaft 2 as the temperature rises, whereby an excessive pre-load is forced on the rolling elements 4 so as to increase the axial load.

The shaft bearing 1 normally deteriorates in proportion with a cube of the axial load. The increase of axial load in turn increases the noise and vibration, which shakes the rotating mirror 8. If it is used in image recording apparatus such as LBP, a problem of pitch unevenness will be caused on an image. Also, a drop in temperature of the shaft bearing 1 excessively reduces the pre-load thereby to lower the shaft shake precision, which causes the problem of pitch unevenness on an image due to shake of the rotating mirror 8.

### SUMMARY OF THE INVENTION

It is an object of the present invention to provide a deflection scan apparatus free of the pitch unevenness on image with change of temperature, solving the problems as described above.

The above object can be achieved by a deflection scan apparatus according to the present invention in which a rotating mirror is rotated for deflection scan of light beam by a motor with shaft bearing, wherein a shaft of the shaft bearing is made of a material having a coefficient of linear thermal expansion substantially coincident with that of a sleeve for positioning and fixing outer rings in the shaft bearing.

The deflection scan apparatus arranged as described has the shaft of shaft bearing made of a material having a coefficient of linear thermal expansion substantially coincident with that of the sleeve fixedly holding the outer rings, so that the shaft and the sleeve may be deformed approximately by the same amount in the shaft-extending direction as the temperature changes.

### BRIEF DESCRIPTION OF THE DRAWINGS

Fig. 1 is a cross section of a conventional deflection scan apparatus;
Fig. 2 is a cross section of a first embodiment of deflection scan apparatus according to the present invention;
Fig. 3 is an enlarged cross section of the main part in Fig. 2;
Fig. 4 is a drawing to illustrate the construction of the entire deflection scan apparatus according to the present invention;
Fig. 5 is a cross section of a second embodiment of deflection scan apparatus according to the present invention;
Fig. 6 is an enlarged cross section of the main part in Fig. 5; and
Fig. 7 is a cross section of a third embodiment of deflection scan apparatus according to the present invention.

### DETAILED DESCRIPTION OF THE PREFERRED EMBODIMENTS

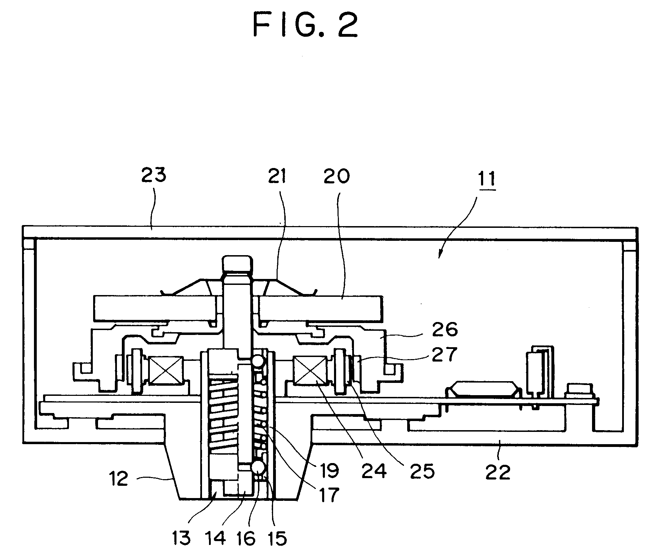

The deflection scan apparatus of the present invention will be described in detail with embodiments as shown in Fig. 2 to Fig. 7.

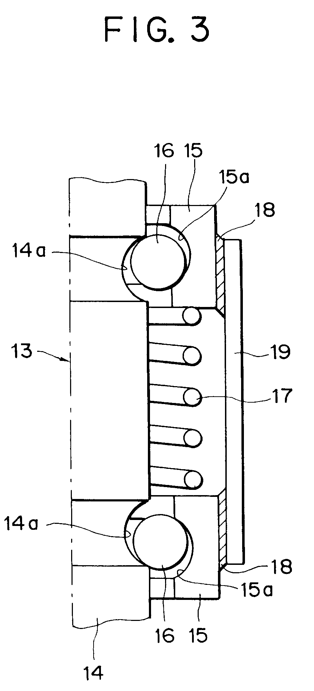

Fig. 2 is a cross section of a first embodiment and Fig. 3 is an enlarged cross section of the main part thereof. A shaft bearing 13 is fixedly set in a housing 13 of motor unit 11. A shaft 14 of the shaft bearing 13 is made of a stainless steel SUS440 (name in JIS) having a coefficient of linear thermal expansion of 10.2×10⁻⁶, and two annular grooves 14a are formed on the peripheral surface thereof. Two outer rings 15, each of which has an annular groove 15a on the inner surface thereof, are arranged to surround the annular grooves 14a, respectively. A plurality of rolling elements 16 are set in between the annular grooves 14a and 15a so that the shaft 14 can rotate in a smooth manner. The outer rings 15 and the rolling elements 16 are made of SUJ2 (name in JIS) having a coefficient of linear thermal expansion of 12.5×10⁻⁶, which is different by about 20 % from the linear expansion coefficient of the shaft 14.

A pre-load spring 17 is set between the outer rings 15 to provide a pre-load on the rolling elements 16, so that the pre-load spring 17 urges the outer rings 15 to estrange one from the other. The outer rings 15 are fixed to a sleeve 19 by adhesive 18. The sleeve 19 is made of a stainless steel SUS430 (name in JIS) having a coefficient of linear thermal expansion of 10.4×10⁻⁶. Therefore, the linear expansion coefficient of the sleeve 19 is almost identical to that of the shaft 14. Then a difference of linear expansion coefficient is not more than 20 % between the sleeve 19 and the rolling elements 16. The pre-load spring 17 provides the pre-load on the rolling elements 16, whereby the outer rings 15 and the rolling elements 16 come closer to each other.

The sleeve 19 is secured to the housing 12, and a rotating mirror 20 is fixed on the shaft 14 by a spring 21. The housing 12 is encased in an optical box 22, and a cover 23 is attached to the optical box 22.

The fixed sleeve 19 is provided in the center of the housing 12 in the motor unit 11. A stator 25 with stator coil 24 provided thereon is attached to the outer wall of the sleeve 19. A rotor magnet 24 is attached to the inner wall of rotor 26 having an outer cylinder coaxial with the sleeve 19. The end wall of the rotor 26 is fixedly fit on the rotational shaft 14. When the coil 24 is energized, the rotor 26 rotates together with the shaft 14, whereby the rotation polygon mirror 20 is also rotated together with the shaft 14 for scan of light beam.

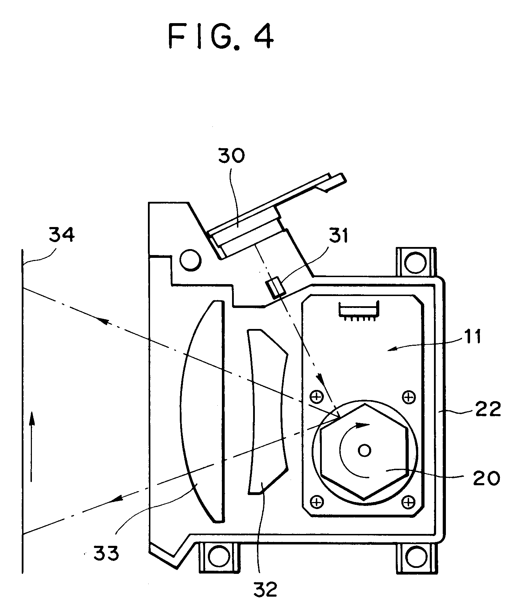

Next described with Fig. 4 is the structure of the entire deflection scan apparatus of the present invention.

In Fig. 4, reference numeral 30 designates a laser source unit comprised of a semiconductor laser emitting a light beam, a collimator lens for collimating the light beam emitted therefrom into a beam of almost parallel rays, and a laser drive circuit for modulating the emitted light beam according to image information.

The light beam from the laser source unit 30 passes through a cylindrical lens 31, which is a first image-forming lens. Then the light beam is deflected and scanned by the rotation polygon mirror 20 for scan of light beam on a scanned object.

The rotation polygon mirror 20 has a plurality of reflection mirror facets, which are processed to have an almost identical reflectivity. Further, although the angle of reflection of the light beam differs upon deflection of light beam, the mirror facets are processed to provide the almost identical reflectivity at any angle of reflection. Numeral 11 denotes the motor unit for rotating the rotation polygon mirror 20 at high precision in the direction of arrow.

The thus deflection-scanned light beam is guided through a concave lens 32, which is a second image-forming lens having the f-ϑ characteristic, and then through a convex lens 33, which is a third image-forming lens, onto a photosensitive drum 34 as recording medium so as to effect recording of image by ordinary procedure.

The laser source unit 30, the lenses 31, 32, 33 and the motor unit 11 are set at respectively designed positions at high precision in the optical box 22 processed at high precision.

As described above, the deflection scan apparatus of the present invention is so arranged that the two outer rings each having an annular groove 15a are set on the shaft 14 having two annular grooves 14a and that the rolling elements 16 are set in between the annular grooves 14a and 15a. The pre-load spring 17 is disposed between the two outer rings 15. While the pre-load spring 17 biases the outer rings 15 to estrange them from each other, the outer rings 15 are bonded by adhesive 18 to the sleeve 19 made of the material having the coefficient of linear thermal expansion almost identical with that of the shaft 14.

In such an arrangement, even if the temperature of the shaft bearing 13 changes with change in temperature of motor unit 14, a change of distance between the two annular grooves 14a on the shaft 14 is the same as that between the two annular grooves 15a on the outer rings 15 in the axial direction, because the linear expansion coefficient of the shaft 14 is set to be almost identical with that of sleeve 19 such that the difference of thermal expansion coefficient there between is set is within 20 %. Therefore, the pre-load exerted on the rolling elements 16 is kept unchanged.

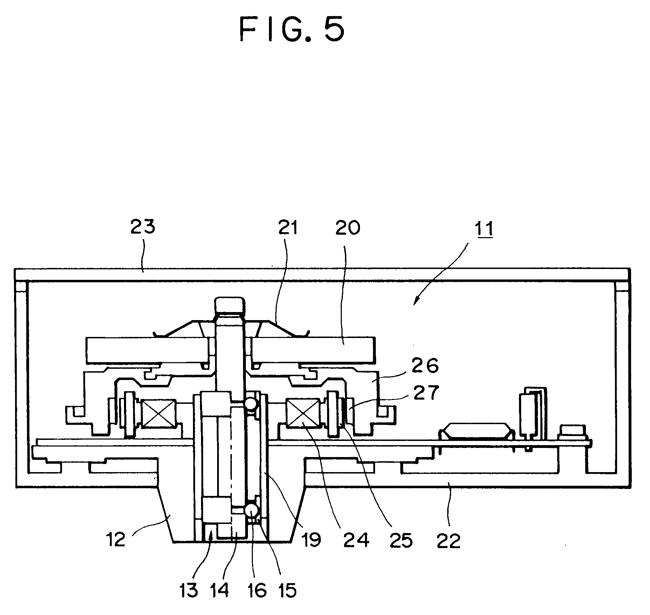

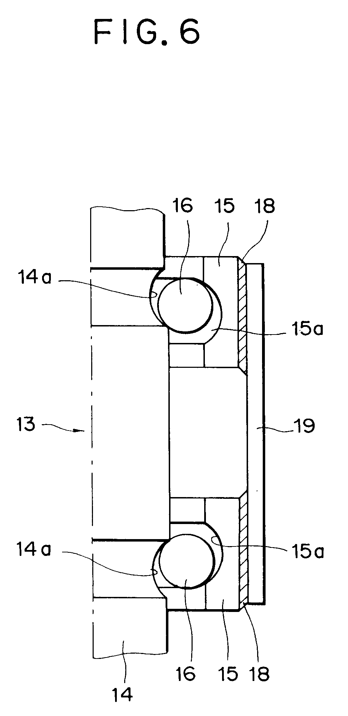

Fig. 5 is a cross section of the second embodiment of deflection scan apparatus according to the present invention, and Fig. 6 is an enlarged cross section of the main part thereof. In the second embodiment, the pre-load spring 17 in the first embodiment is obviated, and then the outer rings 15 are fixed on the sleeve 19 as to approach each other. The structure of the entire deflection scan apparatus is the same as described in Fig. 4.

In this arrangement, the pre-load is forced on the rolling elements 16 and the linear expansion coefficient of the shaft 14 is almost identical with that of the sleeve 19. Then the same effect as in the first embodiment can be expected upon change of temperature. Further, the present embodiment obviates the pre-load spring 17, which reduces the production cost of the apparatus.

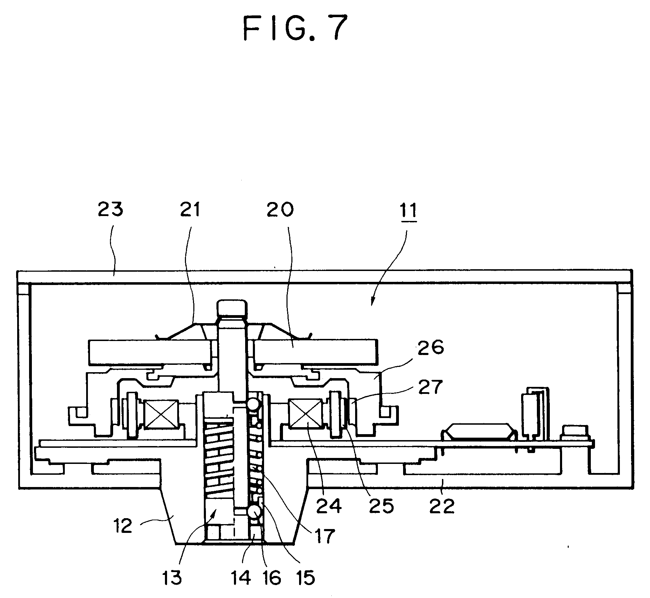

Fig. 7 is a cross section of the third embodiment of deflection scan apparatus according to the present invention. In the third embodiment, the sleeve 19 in the first or second embodiment is obviated, and the outer rings 15 are fixed on the housing 12 of motor having a coefficient of linear thermal expansion almost equal to that of the shaft 14 so as to provide a pre-load on the rolling elements 16. In the present embodiment, the same effect as in the first and the second embodiments will be also shown upon change of temperature. Further, the number of components and the number of assembling steps are decreased, which reduces the production cost of the apparatus. The structure of the entire deflection scan apparatus is the same as that in Fig. 4.

Although the motor unit 11 is of the radial gap type and of the outer rotor type in the above embodiments, it may be of the axial gap type or of the inner rotor type. Further, although the shaft 14 and the sleeve 19 are made of the two types of stainless steel in the above embodiments, they may be made of different materials for example such that the shaft 14 is made of a stainless steel and the sleeve 19 is made of a synthetic resin reinforced by glass fibers, which has a linear expansion coefficient almost identical with that of the stainless steel.

As described above, the deflection scan apparatus according to the present invention is so arranged that the shaft and the sleeve are made of materials having almost identical coefficients of linear thermal expansion, whereby the shaft and the sleeve are deformed by the same amount upon change of temperature so as to keep the pre-load exerted on the rolling elements unchanged. This prevents the noise and vibration accordingly, which in turn results in preventing the image pitch unevenness due to bearing deterioration or shaft shake.

A deflection scan apparatus includes a shaft having a recess on a peripheral surface thereof, a deflector attached to the shaft, for deflecting a light beam, an outer ring having a recess on an inner surface thereof, a rolling member provided between the recess of the shaft and the recess of the outer ring, a fixing member to which the outer ring is fixed, the fixing member being made of a material having a coefficient of linear thermal expansion substantially coincident with that of the shaft, and a drive device for rotating the shaft.

## Claims

1. A deflection scan apparatus comprising:
a shaft having a recess on a peripheral surface thereof;
a deflector attached to said shaft, for deflecting a light beam;
an outer ring having a recess on an inner surface thereof;
a rolling member provided between the recess of said shaft and the recess of said outer ring;
a fixing member to which said outer ring is fixed, said fixing member being made of a material having a coefficient of linear thermal expansion substantially coincident with that of said shaft; and
drive means for rotating said shaft.

2. A deflection scan apparatus according to Claim 1, further comprising means for making said outer ring and said rolling member approach each other to provide a pre-load on said rolling member.

3. A deflection scan apparatus according to Claim 1, wherein said fixing member is a sleeve.

4. A deflection scan apparatus according to Claim 1, wherein said fixing member is a housing of a motor.

5. A deflection scan apparatus according to Claim 1, wherein said shaft and said fixing member are made of stainless steel.

6. A deflection scan apparatus according to Claim 1, wherein said shaft is made of stainless steel and said fixing member is of a reinforced synthetic resin.

7. A bearing apparatus comprising:
a shaft having a recess on a peripheral surface thereof;
an outer ring having a recess on an inner surface thereof;
a rolling member provided between the recess of said shaft and the recess of said outer ring; and
a fixing member to which said outer ring is fixed, said fixing member being made of a material having a coefficient of linear thermal expansion substantially coincident with that of said shaft.

8. A bearing apparatus according to Claim 7, further comprising means for making said outer ring and said rolling member approach each other to provide a pre-load on said rolling member.

9. A bearing apparatus according to Claim 7, wherein said shaft and said fixing member are made of stainless steel.

10. A bearing apparatus according to Claim 7, wherein said shaft is made of stainless steel and said fixing member is made of a reinforced synthetic resin.

11. A bearing rotating apparatus comprising:
a shaft having a recess on a peripheral surface thereof;
an outer ring having a recess on an inner surface thereof;
a rolling member provided between the recess of said shaft and the recess of said outer ring;
a fixing member to which said outer ring is fixed, said fixing member being made of a material having a coefficient of linear thermal expansion substantially coincident with that of said shaft; and
drive means for rotating said shaft.

12. A bearing rotating apparatus according to Claim 11, further comprising means for making said outer ring and said rolling member approach each other to provide a pre-load on said rolling member.

13. A bearing rotating apparatus according to Claim 11, wherein said fixing member is a sleeve.

14. A bearing rotating apparatus according to Claim 11, wherein said fixing member is a housing of a motor.

15. A bearing rotating apparatus according to Claim 11, wherein said shaft and said fixing member are made of stainless steel.

16. A bearing rotating apparatus according to Claim 11, wherein said shaft is made of stainless steel and said fixing member is of a reinforced synthetic resin.

17. An image recording apparatus comprising:
a light source;
a shaft having a recess on a peripheral surface thereof;
a deflector attached to said shaft, for deflecting a light beam;
an outer ring having a recess on an inner surface thereof;
a rolling member provided between the recess of said shaft and the recess of said outer ring;
a fixing member to which said outer ring is fixed, said fixing member being made of a material having a coefficient of linear thermal expansion substantially coincident with that of said shaft;
drive means for rotating said shaft; and
a photosensitive member for receiving the light beam deflected by said deflector.

18. An image recording apparatus according to Claim 17, further comprising means for making said outer ring and said rolling member approach each other to provide a pre-load on said rolling member.

19. An image recording apparatus according to Claim 17, wherein said fixing member is a sleeve.

20. An image recording apparatus according to Claim 17, wherein said fixing member is a housing of a motor.

21. An image recording apparatus according to Claim 17, wherein said shaft and said fixing member are made of stainless steel.

22. An image recording apparatus according to Claim 17, wherein said shaft is made of stainless steel and said fixing member is of a reinforced synthetic resin.
